# EUROPEAN PATENT SPECIFICATION

(11) **EP 3 521 152 B1**
(45) Date of publication and mention of the grant of the patent: **12.02.2020**
(21) Application number: 18185714.5
(22) Date of filing: 26.07.2018
(51) Int. Cl.: B62M 6/80, B62K 19/40, B62K 19/06, B21D 26/033, B21D 35/00, B21D 53/86, B60L 53/16, B60L 50/20, B62J 99/00, B23P 15/00

(54) **INTEGRAL MIDDLE TUBE OF ELECTRIC BICYCLE AND HYDRAULIC FORMING METHOD THEREOF**
INTEGRALES MITTELROHR FÜR EIN ELEKTRISCHES FAHRRAD UND VERFAHREN ZUR HYDRAULISCHEN FORMUNG DAVON
TUBE MÉDIAN INTÉGRAL DE BICYCLETTE ÉLECTRIQUE ET SON PROCÉDÉ DE FORMAGE HYDRAULIQUE

(30) Priority: 05.02.2018 CN 201810111572
(43) Date of publication of application: 07.08.2019
(73) Proprietor: TIANCHEN BICYCLE-PARTS (SHENZHEN) CO., LTD., Shenzhen Guangdong (CN); A-FORGE ENTERPRISE CO., LTD., Taichung City (TW)
(72) Inventor: CHANG, Te - Chen, Taichung City (TW)
(74) Representative: de Arpe Fernandez, Manuel

(56) References cited:
- DE-U1-202013 008 187
- DE-U1-202016 102 118
- US-A1- 2013 241 174
- US-A1- 2017 034 937

## Description

### BACKGROUND

### 1. Technical Field

The present disclosure generally relates to electric bicycles field, and especially relates to an integral middle tube of an electric bicycle and a hydraulic forming method thereof.

### 2. Description of Related Art

A charging holder of an electric bicycle is generally positioned on a left-upper side of a lower tube or a lower side of the lower tube. Because there are too many holes formed on the lower tube, and the charging holder is formed parallel to other holes, which is easy to cause a fracture phenomenon and unfavorable to the strength and appearance of the electronic bicycle. In some conventional electric bicycles, a mounting portion of the charging holder is fixed to the middle tube by a welding way. In this way, the welding process is complicated and too many welding and correction tools are required so that both manpower and material resources need higher cost. At the same time, the appearance of the welded product is difficult to be smooth, and the quality is unstable and the production capacity is low due to the welding level of each technician is inconsistent. In conclusion, there is a need to improve the structure of the middle tube and the motor holder of the electric bicycle. US 2013/241174 A1 discloses an integral middle tube according to the preamble of claim 1 as well as a bicycle frame including a head tube, a bottom bracket adapted to support a crankset, and a tubular frame member that defines a compartment. The bicycle frame also includes a battery pack disposed in the compartment and a chargeport coupled to the tubular frame member. The chargeport includes an electrical contact that is accessible from outside the tubular frame member and that is electrically coupled to the battery pack. A chargeport cover is magnetically coupled to the chargeport to enclose the electrical contact, and is further engageable with the tubular frame member when the chargeport cover is removed from the chargeport. DE 20 2016 1021 18 U1 discloses a middle tube of an electric bicycle formed by hydraulic forming.

### SUMMARY

The technical problems to be solved: in view of the shortcomings of the related art, the present disclosure relates to an integral middle tube of an electric bicycle and a hydraulic forming method thereof which can provide an improved middle tube integrated with a charging holder tube by an integrally hydraulic forming way for simplifying the welding assembling step of a frame and improving the yield of the product.

The technical solution adopted for solving technical problems of the present disclosure is:
an integral middle tube of an electric bicycle includes a middle tube and a charging holder tube integrated with the middle tube by a hydraulic forming way. The charging holder tube is connected to a lower portion of the middle tube. Both the middle tube and the charging holder tube are hollow structure. The charging holder tube includes at least one flat surface to form a mounting member of a charging holder, and the mounting member includes a settling plate indented inward from a middle portion of the flat surface towards an inner portion of the middle tube, with a mounting portion being formed on the settling plate, and a plug interface formed on the middle portion of the settling plate for the charging holder to be exposed.

Wherein the plug interface includes an auxiliary recess formed on an edge thereof for a cover passing through the auxiliary recess to removably connect to the charging holder received in the charging holder tube.

Wherein the mounting portion is at least two screwing holes formed on the settling plate.

Wherein the charging holder tube is surrounded by four flat surfaces, and a connection portion of each two adjacent flat surfaces is formed a round angle.

Wherein a wall thickness range of the charging holder tube is 2.2mm-3.5mm, a radius of a first fillet at two opposite ends of the flat surface is 2mm-4mm, and a radius of a second fillet at a periphery edge of the settling plate is 5mm-7mm.

A hydraulic forming method of an integral middle tube of an electric bicycle according to an exemplary embodiment of the present disclosure includes the following steps:
Providing a circular tube according to a required dimension;
Soaking the circular tube in lubricant to attach the lubricant on a surface of the circular tube;
Stretching the circular tube by a pulling machine and a corresponding shaft core to obtain the circular tube with a uniform wall thickness;
Annealing the circular tube by a heat treatment furnace to reduce its hardness;
Processing the outer diameter circumference of the circular tube at different positions by a tube shrink machine to meet requirements of the integral middle tube and the charging holder tube;
Annealing the circular tube again by the heat treatment furnace to further reduce its hardness and soaking it again in the lubricant;
Pre-shaping the circular tube by a hydraulic mould to obtain a primary product with an elementary contour of the middle tube and the charging holder tube;
Stamping the primary product by a mould and adjusting the middle tube and the charging holder tube to enhance the matching degree between the primary product and a forming mould;
Hydraulic processing the primary product by the forming mould to obtain a molded product after the primary product is adjusted; and
Tailoring the molded product to obtain the molded product with a required dimension and processing the molded product by a milling machine to obtain the mounting member of the charging holder.

Wherein the step of adjusting the middle tube and the charging holder tube to enhance the matching degree between the primary product and a forming mould includes a fillet process of the charging holder.

Wherein the lubricant used for soaking is mixed according to the ratio of water to lubricating oil at 1:3, the temperature is heated to 80±5 degrees centigrade, and the soaking time of the circular tube is 3 minutes.

Wherein in the annealing step, the working temperature of the heat treatment furnace is 500 degrees centigrade and the working time is 4 hours.

The present disclosure provides the advantages as below.

The structure of the present disclosure can provide an improved middle tube integrated with a charging holder tube by an integrally hydraulic forming way for simplifying the welding assembling step of a frame and improving the yield of the product.

### BRIEF DESCRIPTION OF THE DRAWINGS

Many aspects of the embodiments can be better understood with reference to the following drawings. The components in the drawings are not necessarily dawns to scale, the emphasis instead being placed upon clearly illustrating the principles of the embodiments. Moreover, in the drawings, like reference numerals designate corresponding parts throughout the several views.
FIG. 1 is a radial schematic view of the integral middle tube of an electric bicycle in accordance with an exemplary embodiment, shown in a use state.
FIG. 2 is a radial schematic view of a charging holder tube of the middle tube of FIG. 1.

The element labels according to the exemplary embodiment of the present disclosure shown as below:
1, middle tube; 1a, lower portion; 2, charging holder tube; 2a, mounting member; 20, flat surface; 21, settling plate; 21a, mounting portion; 22, plug interface; 220, auxiliary recess; 221, screwing hole; 3, charging holder; 30, cover; 31, screw; A, first fillet; B, second fillet.

### DETAILED DESCRIPTION

The disclosure is illustrated by way of example and not by way of limitation in the figures of the accompanying drawings, in which like reference numerals indicate similar elements.

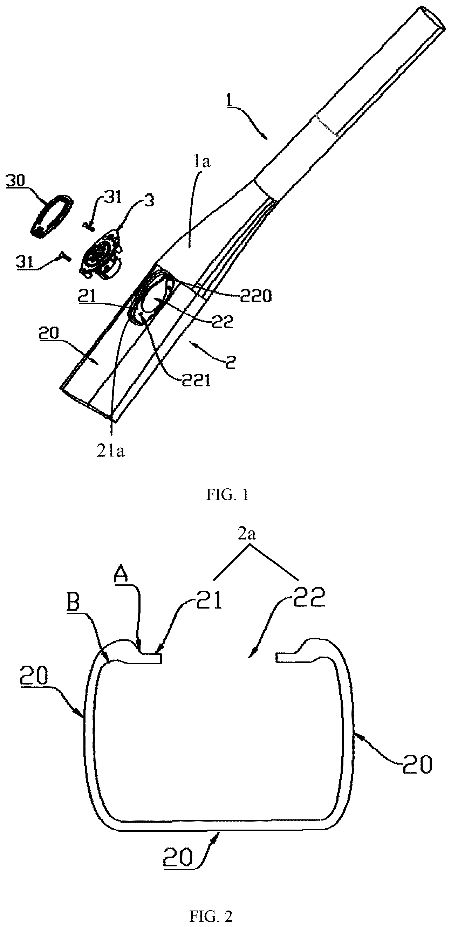

Referring to FIGS. 1-2, an integral middle tube of an electric bicycle is provided and includes a middle tube 1 and a charging holder tube 2 integrated with the middle tube 1 by a hydraulic forming way. The charging holder tube 2 is connected to a lower portion 1a of the middle tube 1 and both the middle tube 1 and the charging holder tube 2 are hollow structure. The charging holder tube 2 includes at least one flat surface 20 to form a mounting member 2a of a charging holder 3. The mounting member 2a includes a settling plate 21 indented inward from a middle portion of the flat surface 20 towards an inner portion of the middle tube 1, with a mounting portion 21a being formed on the settling plate 21, and a plug interface 22 formed on the middle portion of the settling plate 21 for the charging holder 3 to be exposed.

During assembling a conventional electric bicycle, the middle tube 1 and the mounting member 2a of the charging holder 3 are first respectively supplied by two different professional suppliers, and then the middle tube 1 and the charging holder 3 are welded together by a frame factory. In this way, the welding process is complicated and too many welding and correction tools are required so that both manpower and material resources need higher cost. At the same time, the appearance of the welded product is difficult to be smooth, and the quality is unstable and the production capacity is low due to the welding level of each technician is inconsistent. After the improvement, the charging holder tube 2 and the middle tube 1 of the electric bicycle are integrally formed each other by a hydraulic forming way, and the mounting member 2a of the charging holder 3 is formed on the charging holder tube 2, thereby a welding process is omitted and the cost of manpower and material resources is reduced. So, it is convenient to assemble the charging holder 3 and use its functions. Meanwhile, it not only can improve productivity, quality, safety performance and lifespan of frames no matter accessory and frame factories, but also can improve the structure of aluminum alloy so that it has high hardness, high toughness, pressure resistance, tension resistance and light quality. Thus, it is convenient for processing, manufacturing and environmental protection.

Preferably, the plug interface 22 includes an auxiliary recess 220 formed on an edge thereof for a cover 30 passing through the auxiliary recess 220 to removably connect to the charging holder 3 received in the charging holder tube 2. The cover 30 is provided for protecting the charging holder 3 and reducing the safety risk of the plug interface 22. The cover 30 is usually made of silica gel material, with one end thereof being connected with the charging holder 3 at the auxiliary recess 220. A connection mode between the cover 30 and the charging holder 3 can be realized to rotate by a shaft structure or can be realized to open and close by a structure with frequently bending.

In some exemplary embodiments of the present disclosure, the mounting portion 21a is at least two screwing holes 221 formed on the settling plate 21. The charging holder 3 is fixed to the settling plate 21 by screws 31, thereby the assembly operation is simple and easy to implement.

In some exemplary embodiments of the present disclosure, the charging holder tube 2 is surrounded by four flat surfaces 20, and a connection portion of each two adjacent flat surfaces 20 is formed a round angle. A wall thickness range of the charging holder tube 2 is 2.2mm-3.5mm, a radius of a first fillet A at two opposite ends of the flat surface 20 is 2mm-4mm, and a radius of a second fillet B at a periphery edge of the settling plate 21 is 5mm-7mm. The wall thickness of the charging holder 3 can ensure a certain strength, while the radius of the first and second fillets A, B can ensure that the forming process is good, if beyond which it is difficult to shape the product.

A hydraulic forming method of an integral middle tube of an electric bicycle according to an exemplary embodiment of the present disclosure includes the following steps:
Blanking a circular tube: blanking a circular tube according to a required dimension from raw materials;
Leather film saponification: mixing lubricant according to the ratio of water to lubricating oil at 1:3, heating the temperature at 80±5 degrees centigrade, and soaking the circular tube in the lubricant for 3 minutes to attach the lubricant to a surface of the circular tube to prevent the circular tube from being broken during in a stretching process;
Stretching the circular tube: after soaking the circular tube in the lubricant, stretching the circular tube by a pulling machine and a corresponding shaft core inserting into the circular tube to obtain the circular tube with a uniform wall thickness;
Annealing: T4 annealing the circular tube by a heat treatment furnace to reduce its hardness for conveniently bending or slanting the circular tube in a next process without breaking or surface tension, with the working temperature of the heat treatment furnace being 500 degrees centigrade and the working time being 4 hours;
Contracting the circular tube: after the annealing step, tilting the circular tube to change the dimension of the outer diameter circumference of the circular tube at different positions by a tube shrink machine to meet requirements of the integral middle tube and the charging holder;
Tempering the circular tube: after the previous steps, the properties of the material can be changed. The circular tube should be annealed again by the heat treatment furnace to further reduce its hardness and prevent from breaking or surface tension, with the working temperature of the heat treatment furnace being 500 degrees centigrade and the working time being 4 hours. In this way, the performance of the circular tube can be further improved to prevent the circular tube from being broken during in a next forming process.

Leather film saponification again: the circular tube also should be soaked again in the lubricant, with the lubricant being again mixed according to the ratio of water to lubricating oil at 1:3, heating the temperature at 80±5 degrees centigrade, and soaking the circular tube in the lubricant for 3 minutes to attach the lubricant on a surface of the circular tube to further prevent the circular tube from being broken during in a stretching process;
Pre-forming the circular tube: pre-forming the circular tube by a hydraulic mould to obtain a pre-formed product close to a finished product and change the outer shape of the circular tube for enhancing the matching degree between the pre-formed product and a forming mould;
Adjusting the circular tube: further processing the pre-formed product by a punching machine to adjust the deform portion and the modeling structure of the circular tube close to the finished product for facilitating further forming the product, such as fillet operation;
Hydraulic forming: hydraulic forming the product after all the previous steps are finished, during the hydraulic forming step, the hydraulic pressure and the sliding block size corresponding to the mould are controlled;
Tailoring: tailoring two opposite ends of the molded product to remove its leftover material and maintain a final dimension of the molded product;
CNC (milling machine) processing: processing the molded product by a milling machine to obtain the plug interface of the charging holder, the mounting portion and a corresponding part and remove its leftover material after the circular tube is processed by the hydraulic forming step;
Grinding and polishing: after the CNC processing step is finished, polishing a surface of the product by a grinding wheel, and then deburring and inspecting the product to obtain a finished product, finally packaging and shipping the finished product.

## Claims

1. An integral middle tube of an electric bicycle comprising: a middle tube (1) and a charging holder tube (2) integrated with the middle tube (1), the charging holder tube (2) being connected to a lower portion (1a) of the middle tube (1), with the middle tube (1) and the charging holder tube (2) being hollow structures; the charging holder tube (2) comprising at least one flat surface (20) to form a mounting member (2a) of a charging holder (3); the mounting member (2a) comprising a settling plate (21) indented inward from a middle portion of the flat surface (20) towards an inner portion of the middle tube (1), with a mounting portion (21a) being formed on the settling plate (21), and a plug interface (22) formed on the middle portion of the settling plate (21) for the charging holder (3) to be exposed; **characterized in that** the charging holder tube (2) is integrated with the middle tube (1) by a hydraulic forming way, and **in that** the plug interface (22) comprises an auxiliary recess (220) formed on an edge thereof for a cover (30) passing through the auxiliary recess (220) to removably connect to the charging holder (3) received in the charging holder tube (2).

2. The integral middle tube of an electric bicycle as claimed in claim 1, **characterized in that** the mounting portion (21a) is at least two screwing holes (221) formed on the settling plate (21).

3. The integral middle tube of an electric bicycle as claimed in claim 2, **characterized in that** the charging holder tube (2) is surrounded by four flat surfaces (20), and a connection portion of each two adjacent flat surfaces is formed a round angle.

4. The integral middle tube of an electric bicycle as claimed in claim 1, **characterized in that** a wall thickness range of the charging holder tube (2) is 2.2mm-3.5mm, a radius of a first fillet (A) at two opposite ends of the flat surface (20) is 2mm-4mm, and a radius of a second fillet (B) at a periphery edge of the settling plate (21) is 5mm-7mm.

5. A hydraulic forming method of an integral middle tube of an electric bicycle according to claim 1, the method comprising the following steps:
providing a circular tube according to a required dimension;
soaking the circular tube in lubricant to attach the lubricant on a surface of the circular tube;
stretching the circular tube by a pulling machine and a corresponding shaft core to obtain the circular tube with a uniform wall thickness;
annealing the circular tube by a heat treatment furnace to reduce its hardness;
processing the outer diameter circumference of the circular tube at different positions by a tube shrink machine to meet requirements of the integral middle tube (1) and the charging holder tube (2);
annealing the circular tube again by the heat treatment furnace to further reduce its hardness and soaking it again in the lubricant;
pre-shaping the circular tube by a hydraulic mould to obtain a primary product with an elementary contour of the middle tube (1) and the charging holder tube (2);
stamping the primary product by a mould and adjusting the middle tube (1) and the charging holder tube (2) to enhance the matching degree between the primary product and a forming mould;
hydraulic processing the primary product by the forming mould to obtain a molded product after the primary product is adjusted; and
tailoring the molded product to obtain the molded product with a required dimension and processing the molded product by a milling machine to obtain the mounting member (2a) of the charging holder (3).

6. The hydraulic forming method as claimed in claim 5, wherein the step of adjusting the middle tube (1) and the charging holder tube (2) to enhance the matching degree between the primary product and a forming mould comprises a fillet process of the charging holder (3).

7. The hydraulic forming method as claimed in claim 5, wherein the lubricant used for soaking is mixed according to the ratio of water to lubricating oil at 1:3, the temperature is heated to 80±5 degrees centigrade, and the soaking time of the circular tube is 3 minutes.

8. The hydraulic forming method as claimed in claim 5, wherein in the annealing step, the working temperature of the heat treatment furnace is 500 degrees centigrade and the working time is 4 hours.

## Patentansprüche

1. Ein integrales Mittelrohr für ein elektrisches Fahrrad umfassend: ein Mittelrohr (1) und ein Lastaufnahmerohr (2), das im Mittelrohr (1) integriert ist, wobei das Lastaufnahmerohr (2) an den unteren Teil (1a) des Mittelrohres (1) angeschlossen ist, wobei das Mittelrohr (1) und das Lastaufnahmerohr (2) Hohlstrukturen sind;
wobei das Lastaufnahmerohr (2) mindestens eine flache Oberfläche (20) aufweist, um ein Montageelement (2a) einer Lastaufnahme (3) zu bilden; wobei das Montageelement (2a) eine Stützplatte (21) aufweist, die nach innen ausgehend vom Mittelteil der flachen Oberfläche (20) bis zu einem Innenabschnitt des Mittelrohres (1) mit Zacken versehen ist, mit einem Montageabschnitt (21a), der an der Stützplatte (21) angeformt ist,und mit einer Steckerschnittstelle (22), die am Mittelabschnitt der Stützplatte (21) für die Lastaufnahme (3), die freigelegt werden soll, angeformt ist; **dadurch gekennzeichnet, dass** das Lastaufnahmerohr (2) über ein hydraulisches Umformungssystem in das Mittelrohr (1) integriert ist, und dadurch dass
die Steckerschnittstelle (22) mit einer Hilfsaussparung (220) versehen ist, die an einer Kante derselben für eine Abdeckung (30) angeformt ist, die durch die Hilfsaussparung (220) eingepasst wird, um eine lösbare Verbindung mit der Lastaufnahme (3) zu bilden, die in dem Lastaufnahmerohr (2) aufgenommen ist.

2. Das integrale Mittelrohr für ein elektrisches Fahrrad gemäss Anspruch 1, **dadurch gekennzeichnet, dass**
der Montageabschnitt (21a) mindestens durch zwei Schraublöcher (221), die an der Stützplatte (21) geformt sind, gebildet wird.

3. Das integrale Mittelrohr eines elektrsichen Fahrrads gemäss Anspruch 2, **dadurch gekennzeichnet, dass** das Lastaufnahmerohr (2) von vier flachen Oberflächen (20) umgeben ist und dass ein Anscchlussabschnitt von je zwei anliegenden flachen Oberflächen einen abgerundeten Winkel bildet.

4. Das integrale Mittelrohr eines elektrischen Fahrrads gemäss Anspruch 1, **dadurch gekennzeichnet, dass** ein Wandstärkenbereich des Lastaufnahmerohres (2) zwischen 2,2 mm und 3,5 mm liegt, ein Radius einer ersten Ausrundung (A) an zwei gegenüberliegenden Seiten der flachen Oberfläche (20) 2 mm - 4 mm beträgt, und ein Radius einer zweiten Ausrundung (B) an einer Umfangskante der Stützplatte 5 mm - 7 mm beträgt.

5. Ein hydraulische Formgebungsmethode eines integralen Mittelrohres für ein elektrisches Fahrrads gemäss Anspruch 1, wobei die Methode folgende Schritte umfasst:
Bereitstellung eines Rundrohres übereinstimmend mit der geforderten Abmessung;
Eintauchen des Rundrohres in Schmiermittel, um das Schmiermittel auf der Oberfläche des Rundrohres festzuhalten;
Strecken des Rundrohres mittels einer Ziehmaschine und einen entsprechenden Schaftkern, um ein Rundrohr mit einer gleichmässigen Wandstärke zu erhalten;
Glühen des Rundrohres in einem Wärmebehandlungsofen, um die Härte zu verringern;
Bearbeitung des Umfangs des Aussendurchmessers des Rundhores in verschiedenen Lagen mittels einer Rohrschrumpfmaschine zwecks Anpassung an die Anforderungen des integralen Mittelrohrs (1) und des Lastaufnahmerohres (2);
Erneut Glühen des Rundrohres im Wärmebehandlungsofen, um die Härte noch weiter zu reduzieren und erneutes Eintauchen in das Schmiermittel;
Vorformen des Rundrohres mit einer hydraulischen Gussform zwecks Erhalt des Primärproduktes mit einer grundlegenden Kontur des Mittelrohres (1) und des Lastaufnahmerohres (2);
Prägen des Primärproduktes in einer Gussform und Anpassen des Mittelrohres (1) und des Lastaufnahmerohres (2), um den Übereinstimmungsgrad zwischen dem Primärprodukt und der Gussform zu verbessern;
hydraulische Verarbeitung des Primärproduktes mit einer Gussform zwecks erhalt eines Gussteils nach Anpassen des Primärproduktes; und
Bearbeitung des Gussteils auf Mass, um das Gussteil mit den geforderten Abmessungen zu erhalten und Bearbeitung des Gussteils in einer Fräsmaschine, um das Montageelement (2a) der Lastaufnahme (3) herzustellen.

6. Die hydraulische Formgebungsmethode gemäss Anspruch 5, bei der der Schritt der Anpassung des Mittelrohres (1) und des Lastaufnahmerohres (2) zwecks Verbesserung des Übereinstimmungsgrades zwischen dem Primärprodukt und der Gussform ein Ausrundungsverfahren der Lastaufnahme (3) einschliesst.

7. Die hydraulische Formgebungsmethode gemäss Anspruch 5, bei der das verwendete Schmiermittel für das Eintauchen eine Mischung ist übereinstimmend mit dem Verhältnis zwischen Wasser und Schmieröl von 1:3, bei der die Temperatur auf 80± 5 ° C erhöht wird und die Eintauchzeit des Rundrohres 3 Minuten beträgt.

8. Die hydraulische Formgebungsmethode gemäss Anspruch 5, bei der bei dem Schritt des Glühens die Arbeitstemperatur im Wärmebehandlungsofen 500 Grad C beträgt und die Arbeitszeit 4 Stunden.

## Revendications

1. Un tube intermédiaire intégral d'un vélo électrique comprenant: un tube intermédiaire (1) et un tube du support rechargeur (2) intégré au tube intermédiaire (1), le tube du support rechargeur (2) étant connecté à une partie inférieure (1a) du tube intermédiaire (1), ledit tube intermédiaire (1) et le tube du support rechargeur (2) étant des structures creuses; le tube du support rechargeur (2) comprend au moins une surface plate (20) pour former un élément de montage (2a) d'un support rechargeur (3); l'élément de montage (2a) comprend une plaque de fixation (21) décalée vers l'intérieur d'une partie intermédiaire de la surface plate (20) vers une partie intérieure du tube intermédiaire (1); la partie de montage (21a) étant formée sur la plaque de fixation (21), et une interface de raccordement (22) formée sur la partie intermédiaire de la plaque de fixation (21) pour exposer le support rechargeur (3), **caractérisé en ce que** le tube du support rechargeur (2) est intégré au tube intermédiaire (1) selon un formage hydraulique, et **en ce que** l'interface de raccordement (22) comprend une cavité auxiliaire (220) formée sur un de ses bords pour un couvercle (30) à glisser sur la cavité auxiliaire (220) pour connecter de manière détachable au support rechargeur (3) logé dans le tube du support rechargeur (2).

2. Le tube intermédiaire intégral d'un vélo électrique conformément à la revendication 1, **caractérisé en ce que** la partie de montage (21a) a au moins deux trous à vis (221) formés sur la plaque de fixation (21).

3. Le tube intermédiaire intégral d'un vélo électrique conformément à la revendication 2, **caractérisé en ce que** le tube du support rechargeur (2) est entouré de quatre surfaces plates (20) et une partie de raccordement de chacune des surfaces plates adjacentes forme un angle rond.

4. Le tube intermédiaire intégral d'un vélo électrique conformément à la revendication 1, **caractérisé en ce que** l'épaisseur de la paroi du tube du support rechargeur (2) se situe entre 2,2 mm et 3,5 mm; un rayon du premier filet (A) sur les deux extrémités opposées de la surface plate (20) se situe entre 2 mm et 4 mm; et un rayon du deuxième filet (B) sur un bord périphérique de la plaque de fixation (21) se situe entre 5 mm et 7 mm.

5. Méthode de formage hydraulique d'un tube intermédiaire intégral d'un vélo électrique conformément à la revendication 1, ladite méthode comprenant les phases suivantes :
fourniture d'un tube circulaire conformément aux des dimensions requises;
trempage du tube circulaire dans du lubrifiant pour coller le lubrifiant à une surface du tube circulaire;
étirement du tube circulaire au moyen d'une machine de tension et le noyau d'arbre correspondant pour obtenir une épaisseur uniforme de la paroi du tube circulaire ;
recuit du tube circulaire au moyen d'un four de traitement thermique pour réduire sa dureté;
traitement de la circonférence du diamètre extérieur du tube circulaire selon des positions différentes au moyen d'une machine d'ajustement du tube pour l'adapter aux conditions requises du tube intermédiaire intégral (1) et du tube du support rechargeur (2);
procéder de nouveau au recuit du tube circulaire au moyen du four de traitement thermique pour réduire davantage sa dureté et tremper de nouveau dans le lubrifiant;
préformage du tube circulaire avec un moule hydraulique pour obtenir un produit primaire avec des contours élémentaires du tube intermédiaire (1) et du tube du support rechargeur (2) ;
emboutissage du produit primaire avec le moule et ajustement du tube intermédiaire (1) et le tube du support rechargeur (2) pour améliorer le degré d'ajustement entre le produit primaire et le moule de formage;
traitement hydraulique du produit primaire par le moule de formage pour obtenir un produit moulé une fois que le produit primaire a été ajusté; et
adaptation du produit moulé pour obtenir le produit moulé avec les dimensions requises et traitement du produit moulé par la fraiseuse pour obtenir l'élément de montage (2a) du support rechargeur (3).

6. La méthode de formage hydraulique conformément à la revendication 5, où la phase d'ajustement du tube intermédiaire (1) et du tube du support rechargeur (2), pour améliorer le degré d'ajustement entre le produit primaire et le moule de formage, comprend une procédure de filetage du support rechargeur (3).

7. La méthode de formage hydraulique conformément à la revendication 5, où le lubrifiant utilisé pour le trempage est mélangé conformément au ratio de 1 :3 d'eau contenu dans l'huile lubrifiante ; la température est chauffée à 80±5 degrés centigrades, et le temps de trempage du tube circulaire est de 3 minutes.

8. La méthode de formage hydraulique conformément à la revendication 5, où pour la phase de recuit la température de fonctionnement du four de traitement thermique est de 500 degrés centigrades et le temps de fonctionnement est de 4 heures.
